# EUROPÄISCHE PATENTANMELDUNG

(11) **EP 4 231 587 A1**
(43) Veröffentlichungstag der Anmeldung: **23.08.2023**
(21) Anmeldenummer: 22157669.7
(22) Anmeldetag: 21.02.2022
(51) Int. Cl.: H04L 9/40, G06N 20/20

(54) **VERFAHREN ZUR ERKENNUNG VON ANOMALIEN IN DATEN**

(71) Anmelder: One Data GmbH, 94032 Passau (DE)
(72) Erfinder: Wang, Ziye, 94032 Passau (DE); Söldner, Magdalena, 94032 Passau (DE); Böhm, Andreas, 94032 Passau (DE); Wernicke, Sebastian, 94032 Passau (DE)
(74) Vertreter: Wolf, Gerhard

(57) **Zusammenfassung**

Die Erfindung betrifft ein computerimplementiertes Verfahren und ein System zur Anomalieerkennung in zumindest teilweise strukturierten Daten.

## Beschreibung

Die Erfindung betrifft ein computerimplementiertes Verfahren zur Erkennung von Anomalien in Daten. Die Daten sind dabei zumindest teilweise strukturierte Daten.

Computerimplementierte Verfahren zur Erkennung von Anomalien sind bereits bekannt. Anomalien sind Unregelmäßigkeiten in den Daten, die insbesondere in Unternehmen geprüft und nachverfolgt werden (sog. corporate audit oder Unternehmensrevision). Bekannte Verfahren nutzen häufig regelbasierte Algorithmen zur Erkennung von Anomalien. Regelbasierte Verfahren können bekannte, bestimmten Prüfregeln folgende Anomalien erkennen. Jedoch scheitern diese bei dem Detektieren von Abweichungen oder Anomalien, die sich entweder nicht mittels Regeln erkennen lassen oder zu denen noch keine Regeln in dem Regelsatz des Algorithmus existieren. Dies hat zur Folge, dass beispielsweise bei der Auditierung in Unternehmen häufig ein hoher personeller Aufwand entsteht.

Ausgehend hiervon ist es Aufgabe der Erfindung, ein Verfahren zur Detektion von Anomalien in zumindest teilweise strukturierten Daten anzugeben, das eine verbesserte, automatische Erkennung von Anomalien in den Daten ermöglicht und damit den Aufwand für einen menschlichen Nutzer reduziert.

Die Aufgabe wird durch ein Verfahren mit den Merkmalen des unabhängigen Patentanspruchs 1 gelöst. Bevorzugte Ausführungsformen sind Gegenstand der Unteransprüche. Ein Computerprogramm, das einen Programmcode zur Durchführung des Verfahrens zur Detektion von Anomalien enthält, ist Gegenstand des nebengeordneten Patentanspruchs 14 und ein System zur Detektion von Anomalien ist Gegenstand des nebengeordneten Patentanspruchs 15.

Gemäß einem ersten Aspekt bezieht sich die Erfindung auf ein computerimplementiertes Verfahren zur Detektion von Anomalien in zumindest teilweise strukturierten Daten. Insbesondere bezieht sich die Erfindung auf ein computerimplementiertes Verfahren zur Detektion von Anomalien in Unternehmensdaten bei der internen Unternehmensprüfung. Das Verfahren umfasst die folgenden Schritte:
Zunächst wird ein erster Anomalieerkennungs-Algorithmus auf den Daten ausgeführt, wobei der erste Anomalieerkennungs-Algorithmus eine regelbasierte Anomalieerkennungs-Methode implementiert. Die regelbasierte Anomalieerkennungs-Methode nutzt einen Satz von Regeln, basierend auf denen entschieden wird, ob eine Anomalie vorliegt oder nicht. Der erste Anomalieerkennungs-Algorithmus stellt erste Ausgangsinformationen bereit, die durch den ersten Anomalieerkennungs-Algorithmus automatisch erkannte Anomalien enthalten.

Zudem wird ein Ausreißererkennungs-Algorithmus auf den Daten ausgeführt. Der Ausreißererkennungs-Algorithmus ist ein unüberwacht maschinell lernender Ausreißererkennungs-Algorithmus. Der Ausreißererkennungs-Algorithmus ist beispielsweise dazu ausgebildet, basierend auf Clustern Ausreißer, auch als Abweichung bezeichnet, zu erkennen, die potentiell auf eine Anomalie hindeuten können. Ein Beispiel für einen derartigen Ausreißererkennungs-Algorithmus ist der LOF-Algorithmus (LOF: Local Outlier Factor). Der Ausreißererkennungs-Algorithmus stellt zweite Ausgangsinformationen bereit, die durch den Ausreißererkennungs-Algorithmus automatisch erkannte Ausreißer oder Abweichungen enthalten.

Des Weiteren wird eine Recheneinheit bereitgestellt, die zum Ausführen zumindest eines zweiten Anomalieerkennungs-Algorithmus konfiguriert ist. Der zweite Anomalieerkennungs-Algorithmus kann beispielsweise ein künstliches neuronales Netz zur Anomalieerkennung nutzen. Der zumindest eine zweite Anomalieerkennungs-Algorithmus ist ein überwacht maschinell lernender Anomalieerkennungs-Algorithmus. Der zweite Anomalieerkennungs-Algorithmus ist damit ein mittels Trainingsdaten zu trainierender Anomalieerkennungs-Algorithmus.

Es werden Ausgangsinformationen des ersten Anomalieerkennungs-Algorithmus und des Ausreißererkennungs-Algorithmus, d.h. die ersten und zweiten Ausgangsinformationen, an ein Beurteilungsmodul übermittelt. Das Beurteilungsmodul weist eine Nutzerschnittstelle zum menschlichen Überprüfen der Ausgangsinformationen und zur Kennzeichnung der Ausgangsinformationen jeweils mit einer Beurteilungsinformation auf. Die Beurteilungsinformation kann ein Label sein, das angibt, ob es sich nach dem Ermessen des menschlichen Prüfers (nachfolgend auch Auditor genannt) um eine tatsächliche Anomalie handelt oder nicht (z.B. digitale Information: Anomalie/keine Anomalie).

Anschließend werden die Ausgangsinformationen des Ausreißererkennungs-Algorithmus und/oder des ersten Anomalieerkennungs-Algorithmus und die den Ausgangsinformationen zugeordneten Beurteilungsinformationen an die Recheneinheit übermittelt. Insbesondere wird eine Ergebnisliste, die die Anomalien und/oder Ausreißer und die diesen zugeordneten Beurteilungsinformationen enthält, an die Recheneinheit übermittelt. Der zweite Anomalieerkennungs-Algorithmus wird basierend auf den Ausgangsinformationen und den Beurteilungsinformationen, d.h. den Informationen der Ergebnisliste trainiert, um einen trainierten, überwacht maschinell lernenden Anomalieerkennungs-Algorithmus zu erhalten.

Zuletzt erfolgt das Ermitteln von Anomalien in einem zumindest teilweise neuen Satz von Daten mittels des trainierten, überwacht maschinell lernenden Anomalieerkennungs-Algorithmus. Zusätzlich können Anomalien in dem zumindest teilweise neuen Satz von Daten mittels des Ausreißererkennungs-Algorithmus und dem ersten Anomalieerkennungs-Algorithmus ermittelt werden.

Die Ausgangsinformationen der jeweiligen Algorithmen werden nachfolgend auch als Detektionen bezeichnet.

Der technische Vorteil des Verfahrens besteht darin, dass durch die gleichzeitige Nutzung eines regelbasierten Algorithmus und eines unüberwacht lernenden Algorithmus zur Ausreißererkennung zunächst auch Anomalien in Daten erkannt werden können, die durch den Satz von Regeln nicht abgedeckt sind. Die automatisch ermittelten Ausreißer bzw. Anomalien werden anschließend nach der Überprüfung und Beurteilung durch einen menschlichen Auditor als Trainingsdaten für den überwacht maschinell lernenden Anomalieerkennungs-Algorithmus verwendet, so dass dieser sukzessive trainiert wird und dadurch die Erkennung von Anomalien in den Daten sukzessive verbessert wird. Dadurch wird ein Verfahren zur Anomalieerkennung erhalten, dessen automatische Anomalieerkennung sich über die Zeit aufgrund neuer Daten fortlaufend verbessert. Der Aufwand für den menschlichen Auditor wird dadurch gesenkt.

Gemäß einem Ausführungsbeispiel wird der zweite Anomalieerkennungs-Algorithmus in einer Schleife iterativ trainiert, und zwar derart, dass von dem ersten Anomalieerkennungs-Algorithmus und/oder dem Ausreißererkennungs-Algorithmus neue Ausgangsinformationen bereitgestellt werden. Diese neuen Ausgangsinformationen können insbesondere auf neu empfangenen Daten fußen. Die Ausgangsinformationen indizieren, dass es sich dabei um potentielle Ausreißer oder Anomalien handelt. Diese Ausgangsinformationen werden anschließend von einem menschlichen Prüfer überprüft und mit Beurteilungsinformationen versehen. Der zweite Anomalieerkennungs-Algorithmus wird daraufhin basierend auf den neuen Ausgangsinformationen und den Beurteilungsinformationen, die den neuen Ausgangsinformationen zugeordnet sind, weiter trainiert. Durch die Iterationsschleife kann die Detektionsgenauigkeit des zweiten Anomalieerkennungs-Algorithmus sukzessive verbessert werden, so dass in neuen Daten sukzessive Anomalien mit einer höheren Zuverlässigkeit erkannt werden können, die beispielsweise durch den regelbasierten ersten Anomalieerkennungs-Algorithmus nicht erkannt werden.

Gemäß einem Ausführungsbeispiel werden die von dem zweiten Anomalieerkennungs-Algorithmus bereitgestellten Ausgangsinformationen dem Beurteilungsmodul zur menschlichen Überprüfung und Beurteilung zugeführt. Die mit den Beurteilungsinformationen versehenen Ausgangsinformationen des zweiten Anomalieerkennungs-Algorithmus werden anschließend für das Training bzw. die kontinuierliche Verbesserung des zweiten Anomalieerkennungs-Algorithmus verwendet. Nach der manuellen Beurteilung der Ausgangsinformationen des zweiten Anomalieerkennungs-Algorithmus können auch diese zur kontinuierlichen Verbesserung des Anomalieerkennungsverfahrens verwendet werden.

Gemäß einem Ausführungsbeispiel werden die Ausgangsinformationen des Ausreißererkennungs-Algorithmus mit den Ausgangsinformationen des zweiten Anomalieerkennungs-Algorithmus verglichen, um Ausgangsinformationen zu detektieren, die sich auf die gleiche Anomalie beziehen. Basierend auf dem Vergleichsergebnis wird ein Satz von fusionierten Ausgangsinformationen bereitgestellt. Darin sind insbesondere erkannte Doppeldetektionen eliminiert, d.h. bei gleichen oder überlappenden Anomalien wird nur eine detektierte Anomalie an das Beurteilungsmodul weitergeleitet. Der Vergleich und das Fusionieren der Ausgangsinformationen erfolgen zumindest teilweise automatisch. Durch das Fusionieren der Ausgangsinformationen wird ein Satz von Ausgangsinformationen mit einem höherem Vertrauensniveau und ohne Doppeldetektionen erhalten.

Gemäß einem Ausführungsbeispiel sind den Ausgangsinformationen des Ausreißererkennungs-Algorithmus und den Ausgangsinformationen des zweiten Anomalieerkennungs-Algorithmus jeweils Bewertungsinformationen zugeordnet. Beim Fusionieren der Ausgangsinformationen des Ausreißererkennungs-Algorithmus und des zweiten Anomalieerkennungs-Algorithmus, die sich auf die gleiche oder eine überlappende Anomalie beziehen, werden die Bewertungsinformationen zu einer Gesamtbewertungsinformation zusammengeführt. Beispielsweise werden die Bewertungsinformationen zunächst normiert und die normierten Bewertungsinformationen beispielsweise addiert, um zu einer Gesamtbewertungsinformation der fusionierten Ausgangsinformation zu gelangen. Bei der Addition kann es sich um eine gleichgewichtete oder eine ungleich gewichtete Addition handeln.

Vorzugsweise ordnet der Ausreißererkennungs-Algorithmus einem erkannten Ausreißer Bewertungsinformationen zu, die angeben, mit welcher Wahrscheinlichkeit es sich um einen tatsächlichen Ausreißer handelt. Je höher der Wert beispielsweise ist, desto höher ist die Wahrscheinlichkeit, dass es sich tatsächlich um einen Ausreißer handelt. Auch der zweite Anomalieerkennungs-Algorithmus kann den erkannten Anomalien beispielsweise Bewertungsinformationen zuordnen, die angeben, mit welcher Wahrscheinlichkeit es sich um eine tatsächliche Anomalie handelt. Durch Berücksichtigung der Bewertungsinformationen kann ein Ranking der erkannten Detektionen erstellt werden.

Gemäß einem Ausführungsbeispiel werden die Ausgangsinformationen des ersten Anomalieerkennungs-Algorithmus mit den fusionierten Ausgangsinformationen des Ausreißererkennungs-Algorithmus und des zweiten Anomalieerkennungs-Algorithmus verglichen, um Doppeldetektionen zu erkennen. Die erkannten Doppeldetektionen werden anschließend eliminiert, d.h. es wird nur eine detektierte Anomalie an das Beurteilungsmodul weitergeleitet. Der Vergleich und das Eleminieren der Doppeldetektionen erfolgen zumindest teilweise automatisch. Dadurch lässt sich verhindern, dass gleiche oder überlappende Anomalien vom menschlichen Auditor mehrfach geprüft werden müssen.

Gemäß einem Ausführungsbeispiel werden basierend auf mehreren Ausgangsinformationen des zweiten Anomalieerkennungs-Algorithmus und diesen Ausgangsinformationen zugeordneten Beurteilungsinformationen automatisch neue Regeln für den ersten Anomalieerkennungs-Algorithmus erzeugt. Dies erfolgt insbesondere dann, wenn mehrmals ähnliche Anomalien erkannt werden, die einer Systematik bzw. einer Regelmäßigkeit folgen. Damit ist es möglich, unter Ausnutzung der Ergebnisse des maschinell lernenden Algorithmus den Satz von Regeln des regelbasierten ersten Anomalieerkennungs-Algorithmus zu erweitern.

Gemäß einem Ausführungsbeispiel wird eine neu erzeugte Regel durch einen menschlichen Auditor verifiziert und nach der Verifizierung dem Satz von Regeln des ersten Anomalieerkennungs-Algorithmus hinzugefügt. Dadurch ist es möglich, die automatisch neu erzeugte Regel vor deren Aufnahme in den Satz von Regeln zu überprüfen und nach dessen Freigabe erst zu verwenden.

Gemäß einem Ausführungsbeispiel wird das Beurteilungsmodul durch eine Softwareeinheit gebildet, die dazu eingerichtet ist, zumindest eine Liste mit potentiellen Ausreißern oder Anomalien zu erstellen und zu den jeweiligen Listeneinträgen Beurteilungsinformationen hinzuzufügen. Die Softwareeinheit kann beispielsweise Ausreißer und/oder Anomalien empfangen und diese als Listeneinträge in die Liste mit potentiellen Ausreißern oder Anomalien aufnehmen. Anschließend kann ein menschlicher Nutzer bzw. Auditor die in der Liste enthaltenen Ausreißer oder Anomalien sichten, beurteilen (insbesondere mittels Beurteilungsinformationen, dass es sich um eine tatsächliche Anomalie oder einen tatsächlichen Ausreißer handelt) und mittels der Liste nachverfolgen (beispielsweise dann, wenn der Ausreißer oder die Anomalie an eine Fachstelle zur Prüfung gegeben wurde). Dadurch ist mittels der Softwareeinheit ein zentrales Sammeln der Ausreißer oder Anomalien, Beurteilen und Nachverfolgen möglich.

Gemäß einem Ausführungsbeispiel werden der erste Anomalieerkennungs-Algorithmus, der Ausreißererkennungs-Algorithmus und der zweite Anomalieerkennungs-Algorithmus in zumindest einer von der Softwareeinheit verschiedenen, weiteren Softwareeinheit ausgeführt. Die zumindest eine weitere Softwareeinheit weist eine Nutzerschnittstelle auf, mittels der Ausgangsinformationen des ersten Anomalieerkennungs-Algorithmus, des Ausreißererkennungs-Algorithmus und/oder des zweiten Anomalieerkennungs-Algorithmus gesichtet und an die Softwareeinheit, die das Beurteilungsmodul aufweist, zum Nachverfolgen der Ausgangsinformationen weitergeleitet werden können. Dadurch können die Ausreißer oder Anomalien vorab gesichtet werden, um zu entscheiden, welche Ausreißer oder Anomalien weiterverfolgt werden sollen. Die Beurteilung und Weiterverfolgung der Ausreißer bzw. Anomalien erfolgt anschließend in der Softwareeinheit, die das Beurteilungsmodul aufweist. Dadurch wird ein zentrales Nachverfolgen von Ausreißern bzw. Anomalien wesentlich erleichtert.

Zur Ersterkennung von Anomalien in unstrukturierten Daten kann vorzugsweise ein Textmining-Algorithmus verwendet werden. Durch diesen Textmining-Algorithmus werden potentielle Anomalien erkannt, die nach einer Prüfung durch einen menschlichen Nutzer und dem Zuordnen von Beurteilungsinformationen zu diesen Anomalien als Trainingsdaten für den maschinell lernenden Algorithmus zur Ermittlung von Anomalien in unstrukturierten Daten verwendet werden können.

Gemäß einem Ausführungsbeispiel wird ein überwacht maschinell lernender Algorithmus zur Ermittlung von Anomalien in unstrukturierten Daten, insbesondere in Texten, verwendet. Der maschinell lernende Algorithmus kann insbesondere ein natural language processing-Algorithmus sein. Die von dem maschinell lernenden Algorithmus ermittelten Anomalien werden vorzugsweise an das Beurteilungsmodul gesendet, um durch einen menschlichen Nutzer überprüft und mit Beurteilungsinformationen versehen zu werden. Die ermittelten Anomalien werden anschließend zusammen mit den Beurteilungsinformationen dem maschinell lernenden Algorithmus erneut als Trainingsdaten zugeführt, um basierend darauf den maschinell lernenden Algorithmus trainieren zu können.

Gemäß einem Ausführungsbeispiel werden die auf Anomalien hin zu untersuchenden Daten vor der Durchführung der Anomalieerkennung einer Formatanpassungseinheit zugeführt, in der eine Datenkonvertierung auf ein vorgegebenes Datenformat und/oder Datenmodell erfolgt, auf das der erste und zweite Anomalieerkennungs-Algorithmus angewendet werden kann. Dadurch kann erreicht werden, dass bei einer Änderung des Datenformats und/oder Datenmodells der zu analysierenden Daten nicht die Algorithmen zur Anomalie- bzw. Ausreißererkennung angepasst werden müssen.

Gemäß einem weiteren Aspekt wird ein Computerprogramm offenbart. Das Computerprogramm umfasst Befehle, die bei der Ausführung des Programms durch einen Computer diesen veranlassen, das Verfahren nach einem der vorhergehenden Ausführungsbeispielen auszuführen.

Gemäß einem nochmals weiteren Aspekt wird ein System zur Anomalieerkennung in zumindest teilweise strukturierten Daten umfassend eine Eingangsschnittstelle zum Empfangen der auf Anomalien zu untersuchenden Daten, zumindest eine Rechnereinheit und eine Nutzerschnittstelle zur Interaktion mit einem menschlichen Auditor offenbart, wobei:
- die Rechnereinheit dazu konfiguriert ist, einen ersten Anomalieerkennungs-Algorithmus auf die Daten anzuwenden, wobei der erste Anomalieerkennungs-Algorithmus eine regelbasierte Anomalieerkennungs-Methode implementiert;
- die Rechnereinheit dazu konfiguriert ist, einen Ausreißererkennungs-Algorithmus auf die Daten anzuwenden, wobei der Ausreißererkennungs-Algorithmus ein unüberwacht maschinell lernender Ausreißererkennungs-Algorithmus ist;
- die Rechnereinheit ein Softwaremodul aufweist, das zum Ausführen zumindest eines zweiten Anomalieerkennungs-Algorithmus konfiguriert ist, wobei der zumindest eine zweite Anomalieerkennungs-Algorithmus ein überwacht maschinell lernender Anomalieerkennungs-Algorithmus ist;
- die Rechnereinheit dazu ausgebildet ist, die Ausgangsinformationen des ersten Anomalieerkennungs-Algorithmus und des Ausreißererkennungs-Algorithmus zu einem Beurteilungsmodul zu übermitteln, wobei das Beurteilungsmodul die Nutzerschnittstelle umfasst, die zum menschlichen Überprüfen der Ausgangsinformationen und zur Kennzeichnung der Ausgangsinformationen jeweils mit einer Beurteilungsinformation ausgebildet ist;
- die Rechnereinheit dazu ausgebildet ist, den zweiten Anomalieerkennungs-Algorithmus basierend auf den Ausgangsinformationen des Ausreißererkennungs-Algorithmus und/oder des ersten Anomalieerkennungs-Algorithmus und der den Ausgangsinformationen zugeordneten Beurteilungsinformationen zu trainieren, um einen trainierten, überwacht maschinell lernenden Anomalieerkennungs-Algorithmus zu erhalten;
- die Rechnereinheit dazu ausgebildet ist, Anomalien in einem zumindest teilweise neuen Satz von Daten mittels des trainierten, überwacht maschinell lernenden Anomalieerkennungs-Algorithmus zu ermitteln.

Das System ist vorzugsweise dazu ausgebildet, Daten in Echtzeit, quasi-Echtzeit oder hoher Frequenz auf Anomalien hin zu prüfen und damit eine kontinuierliche oder quasi-kontinuierliche interne Unternehmensauditierung zu ermöglichen.

Unter "Softwaremodul" im Sinne der vorliegenden Erfindung wird ein funktionaler Teil einer Applikation verstanden, der eine definierte Funktionalität oder einen Dienst bereitstellt. Ein Softwaremodul kann insbesondere ein funktionaler Teil einer Softwareeinheit sein.

Unter "Softwareeinheit" im Sinne der vorliegenden Erfindung wird eine Applikation verstanden, die eigenständig lauffähig und ausführbar.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft und grob schematisch ein Blockschaltbild eines Systems zur Anomalieerkennung;
- Fig. 2: beispielhaft ein schematisches Blockdiagramm, das das Zusammenwirken mehrerer Softwareeinheiten zur Anomalieerkennung veranschaulicht;
- Fig. 3: beispielhaft und schematisch ein Blockdiagramm, das die Prozessabläufe zur Anomalieerkennung veranschaulicht;
- Fig. 4: beispielhaft ein Blockschaubild des Systems zur zur Anomalieerkennung, das insbesondere die Prozesse zur Datenvorverarbeitung und Datenformatanpassung veranschaulicht; und
- Fig. 5: beispielhaft ein Ablaufdiagramm, das die Schritte des Verfahrens zur Erkennung von Anomalien in zumindest teilweise strukturierten Daten veranschaulicht.

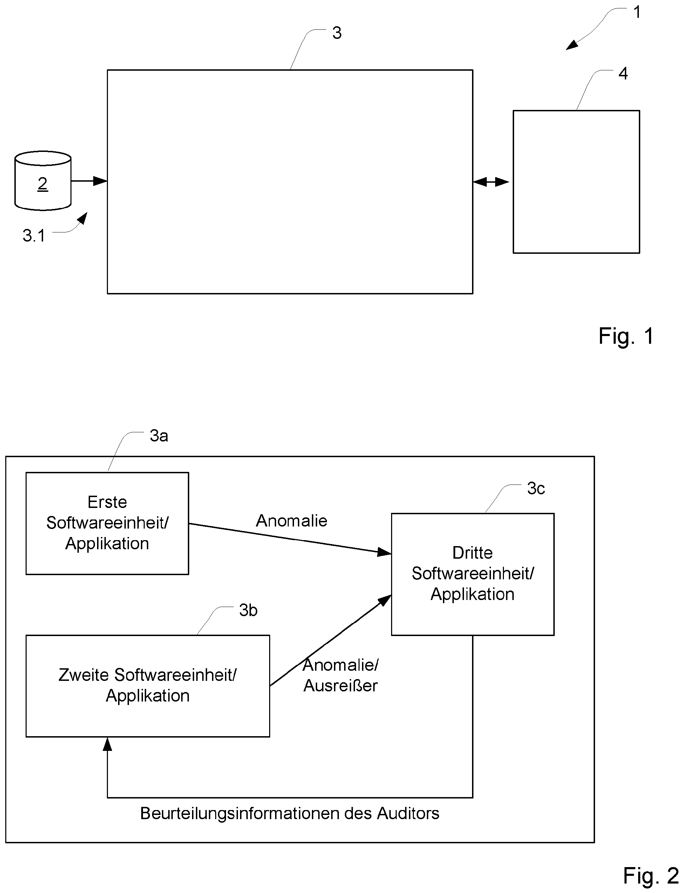

Figur 1 zeigt beispielhaft und grob schematisch ein System 1 zur Erkennung von Anomalien in zumindest teilweise strukturierten Daten 2. "Zumindest teilweise strukturierten Daten" bedeutet hierbei, dass die Daten zumindest teilweise in Tabellen abgelegte Daten umfassen. Die Daten können aber auch Daten in unstrukturierter Form umfassen, beispielsweise Textdateien oder Textpassagen.

Das System 1 umfasst beispielsweise eine Recheneinheit 3, die die Daten 2 an einer Eingangsschnittstelle empfängt und die Daten zur Erkennung von Anomalien weiterverarbeitet.

Die Rechnereinheit 3 ist über eine Ausgangsschnittstelle mit einer Nutzerschnittstelle 4 verbunden. Die Nutzerschnittstelle 4 kann eine Schnittstelle zu einer oder mehreren Applikationen, im Folgenden auch als Softwareeinheiten bezeichnet, bilden. Die Softwareeinheiten können Applikationen sein, die auf der Rechnereinheit 3 ausgeführt werden. Alternativ ist es möglich, dass Teile der Softwareeinheiten auf einer Rechnereinheit, die dem jeweiligen Nutzer oder Auditor zugeordnet ist, ausgeführt werden und andere Teile der Softwareeinheiten auf der Rechnereinheit 3.

Die Nutzerschnittstelle 4 kann insbesondere die Möglichkeit bieten, dass ein menschlicher Nutzer, insbesondere ein Auditor eines Unternehmens, die von der Rechnereinheit 3 als Anomalien oder Ausreißer erkannten Detektionen sichten und kategorisieren kann. "Kategorisieren" bedeutet hierbei insbesondere, dass der Nutzer die einzelnen Detektionen mit einem Label bzw. einer Kennung versehen kann, ob es sich bei der erkannten Detektion tatsächlich um eine Anomalie handelt oder nicht. Das Label bzw. die Kennung kann insbesondere eine binäre Information ("wahr" oder "falsch") sein. Auch kann die Nutzerschnittstelle 4 die Möglichkeit bieten, die erkannten Ausreißer bzw. Anomalien über einen längeren Zeitraum nachzuverfolgen bzw. zu tracken, um feststellen zu können, ob die Anomalie bzw. der Ausreißer bearbeitet bzw. gelöst wurde oder nicht.

Fig. 2 zeigt einen beispielhaften softwareseitigen Aufbau des Systems 1 mehr im Detail.

Eine erste Softwareeinheit 3a bzw. Applikation ist zur Ausführung eines ersten Anomalieerkennungs-Algorithmus 5 ausgebildet. Der erste Anomalieerkennungs-Algorithmus 5 umfasst eine regelbasierte Anomalieerkennungs-Methode. Es ist ein Satz von Regeln vorgegeben, basierend auf denen der erste Anomalieerkennungs-Algorithmus 5 Anomalien in den Daten 2 erkennen kann. Die Regeln können beispielsweise Kriterien enthalten, basierend auf denen ein Datensatz geprüft wird, um festzustellen, ob der Datensatz eine auf eine Anomalie hinweisende Auffälligkeit hat. Der erste Anomalieerkennungs-Algorithmus 5 empfängt, nach gegebenenfalls vorgenommener Vorverarbeitung, die Daten 2 und analysiert diese basierend auf der regelbasierten Anomalieerkennungs-Methode hinsichtlich Anomalien, wobei diese Anomalien als Ergebnis des ersten Anomalieerkennungs-Algorithmus 5 bereitgestellt werden.

Vorzugsweise umfasst die erste Softwareeinheit 3a bzw. Applikation die Möglichkeit, Textdokumente zu durchsuchen. Hierzu kann beispielsweise ein Text-Mining-Algorithmus verwendet werden. Der Text-Mining-Algorithmus kann beispielsweise dazu ausgebildet sein, Muster in den Textdokumenten zu erkennen und daraus potentielle Anomalien abzuleiten. Auch kann beispielsweise eine vordefinierte Schlagwortsuche und/oder eine freie Schlagwortsuche auf ein oder mehrere Textdokumente angewendet werden, um eine Trefferliste mit potentiellen Anomalien zu generieren.

Es kann eine Nutzerschnittstelle vorgesehen sein, mittels der die von dem ersten Anomalieerkennungs-Algorithmus 5 automatisch detektierten Anomalien von einem menschlichen Auditor überprüft werden. Die von dem ersten Anomalieerkennungs-Algorithmus 5 erkannten Anomalien werden anschließend direkt oder nach erfolgter menschlicher Überprüfung an eine dritte Softwareeinheit 3c geschickt. Ebenso können vorzugsweise die von dem Text-Mining-Algorithmus und/oder der Schlagwortsuche ermittelten Treffer über die Nutzerschnittstelle vorab geprüft werden. Dadurch kann eine Vorselektion der Treffer erfolgen. Nach ggf. erfolgter Vorselektion können die Treffer des Text-Mining-Algorithmus und/oder der Schlagwortsuche an die dritte Softwareeinheit 3c geschickt werden.

Die erste Softwareeinheit 3a kann insbesondere eine Auditierungsapplikation für ein Unternehmen (sog. Corporate Auditing App) sein.

Zudem kann eine zweite Softwareeinheit 3b vorgesehen sein, die einen Ausreißererkennungs-Algorithmus 6 implementiert. Unter "Ausreißer" wird ein Eintrag oder ein Wert in einer Tabelle verstanden, der nicht in die Menge anderer Einträge oder Werte passt und/oder nicht den Erwartungen entspricht. Die "Erwartung" wird beispielsweise als Streuungsbereich um den Erwartungswert herum definiert, in dem die meisten aller Einträge oder Werte zu liegen kommen.

Der Ausreißererkennungs-Algorithmus 6 ist beispielsweise ein unüberwacht maschinell lernender Algorithmus. Er kann beispielsweise zur Bildung von Clustern von Einträgen oder Werten ausgebildet sein, um basierend auf diesen Clustern Ausreißer erkennen zu können. Der Ausreißererkennungs-Algorithmus 6 kann beispielsweise einen Localoutlier-factor-Algorithmus (LOF-Algorithmus) implementieren. Alternativ können auch andere Algorithmen zur Ausreißererkennung verwendet werden, beispielsweise einen DBSCAN- oder OPTICS-Algorithmus.

Der Ausreißererkennungs-Algorithmus 6 empfängt, nach gegebenenfalls vorgenommener Vorverarbeitung, die Daten 2 und ermittelt Ausreißer in diesen Daten 2. Diese Ausreißer werden als Ergebnis des zweiten Anomalieerkennungs-Algorithmus 6 bereitgestellt.

Die zweite Softwareeinheit 3b kann eine Nutzerschnittstelle aufweisen, mittels der die von dem Ausreißererkennungs-Algorithmus 6 ermittelten Ausreißer von einem menschlichen Auditor überprüft werden. Die von dem Ausreißererkennungs-Algorithmus 6 erkannten Anomalien können entweder direkt oder nach erfolgter menschlicher Überprüfung an die dritte Softwareeinheit 3c geschickt werden.

Die dritte Softwareeinheit 3c weist eine Nutzerschnittstelle auf, mittels der die von der ersten und zweiten Softwareeinheit 3a, 3b ermittelten Anomalien oder Ausreißer gesichtet und beurteilt werden können. Zudem können die Anomalien oder Ausreißer mittels der dritten Softwareeinheit 3c mit einer Beurteilungsinformation versehen werden. Die Beurteilungsinformation kann auch als "Label" bezeichnet werden. Die Beurteilungsinformation kann eine von einem menschlichen Auditor vergebene digitale Information sein, die angibt, ob es sich bei der automatisch ermittelten Anomalie oder dem automatisch ermittelten Ausreißer nach menschlichem Ermessen tatsächlich um eine Anomalie oder einen Ausreißer handelt oder nicht. Zudem kann die dritte Softwareeinheit 3c dazu ausgebildet sein, eine Anomalie oder einen Ausreißer mit einem Kommentar zu versehen. Des Weiteren kann die dritte Softwareeinheit 3c die Möglichkeit bieten, eine Anomalie oder einen Ausreißer zu tracken, d.h. dessen Entwicklung in der Zukunft zu verfolgen, beispielsweise derart, ob eine Anomalie oder ein Ausreißer von einer bearbeitenden Stelle in dem Unternehmen weiterbearbeitet wurde.

Die dritte Softwareeinheit 3c kann an der Nutzerschnittstelle 4 ein Dashboard zur Veranschaulichung und zum Tracking von erkannten Anomalien bereitstellen. Dabei können vorteilhafterweise die Detektionen des ersten und zweiten Anomalieerkennungs-Algorithmus 5, 7 und des Ausreißererkennungs-Algorithmus 6 zusammengefasst auf dem Dashboard dargestellt, beurteilt, mit Beurteilungsinformationen versehen und getrackt werden. Auch ist die dritte Softwareeinheit 3c vorzugsweise dazu konfiguriert, die Ergebnisse der Anomalieerkennung in einem Prüfbericht zusammenzufassen und den Prüfbericht auszugeben.

Die zweite Softwareeinheit 3b kann zudem einen zweiten Anomalieerkennungs-Algorithmus 7 umfassen. Der zweite Anomalieerkennungs-Algorithmus 7 ist ein überwacht maschinell lernender Anomalieerkennungs-Algorithmus. Der zweite Anomalieerkennungs-Algorithmus 7 empfängt die als Anomalie oder Ausreißer klassifizierten Daten als Trainingsdaten, so dass der Anomalieerkennungs-Algorithmus 7 basierend auf diesen Trainingsdaten sukzessive trainiert wird. Dadurch wird die Fähigkeit des zweiten Anomalieerkennungs-Algorithmus 7 verbessert, selbständig Anomalien zu erkennen.

Die zweite Softwareeinheit 3b kann eine Nutzerschnittstelle aufweisen, mittels der die von dem zweiten Anomalieerkennungs-Algorithmus 7 automatisch detektierten Anomalien von einem menschlichen Auditor überprüft werden können. Die von dem zweiten Anomalieerkennungs-Algorithmus 7 erkannten Anomalien können entweder direkt automatisch oder erst nach erfolgter menschlicher Überprüfung an die dritte Softwareeinheit 3c geschickt werden, um dort getrackt, kommentiert und/oder mit einer Bewertungsinformation versehen zu werden.

Es versteht sich, dass das System 1 abweichend hiervon mehr oder weniger Softwareeinheiten bzw. Applikationen aufweisen kann, d.h. die beschriebenen Funktionalitäten auf mehr oder weniger Softwareeinheiten bzw. Applikationen verteilt werden können. Auch die Verteilung der Funktionalitäten auf die Softwareeinheiten kann abweichend gewählt werden.

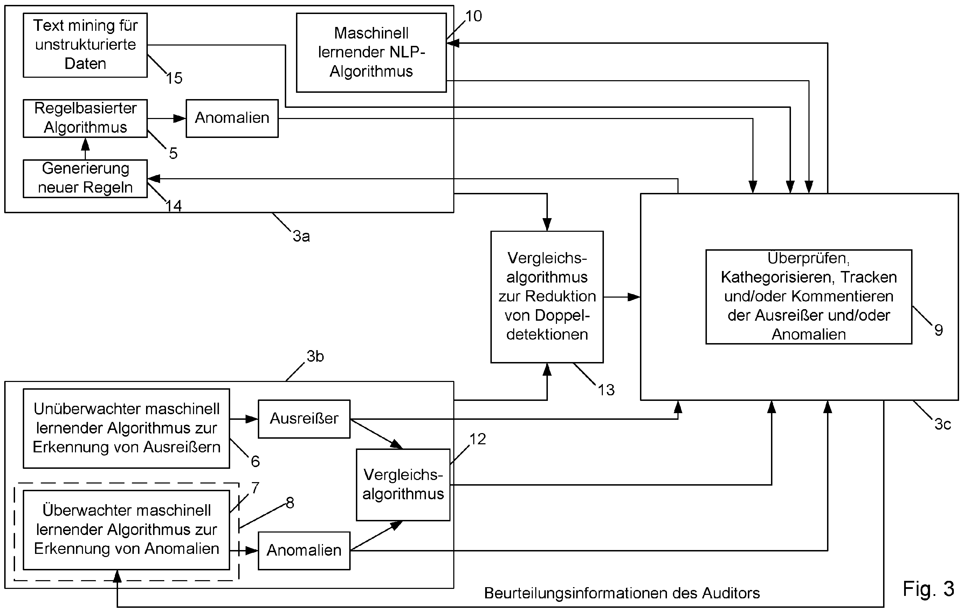

Fig. 3 zeigt die Funktionalitäten der Softwareeinheiten 3a, 3b, 3c und deren funktionale Zusammenhänge mehr im Detail.

Nachfolgend wird ein Verfahren zur sukzessiven Ermittlung von Anomalien bzw. Ausreißern in Daten 2 beschrieben, wobei das System 1, das zur Erkennung der Anomalien bzw. Ausreißer verwendet wird, nicht bereits vorab speziell auf diese Daten 2 angepasst ist, sondern auf diese Daten erst sukzessive adaptiert werden muss.

Die erste Softwareeinheit 3a implementiert den ersten Anomalieerkennungs-Algorithmus 5, der, wie zuvor beschrieben, basierend auf einem Satz von Regeln Anomalien erkennt. Zu Beginn des Verfahrens weist der erste Anomalieerkennungs-Algorithmus 5 einen vorgegebenen Regelsatz auf, basierend auf denen die Anomalieerkennung vollzogen wird. Die von dem ersten Anomalieerkennungs-Algorithmus 5 ermittelten Anomalien können vorab durch einen menschlichen Auditor geprüft werden, insbesondere mittels einer Nutzerschnittstelle, die die erste Softwareeinheit 3a bietet. Die von dem ersten Anomalieerkennungs-Algorithmus 5 detektierten Anomalien werden anschließend, ggf. nach erfolgter Vorüberprüfung, an die dritte Softwareeinheit 3c übertragen. Die erste Softwareeinheit 3a kann durch den Satz von Regeln bekannte Anomalien in den Daten 2 erkennen.

Die zweite Softwareeinheit 3b kann eine Applikation sein, die mehrere maschinell lernende Algorithmen zur Erkennung von Anomalien bzw. Ausreißern in den Daten aufweist.

Die zweite Softwareeinheit 3b weist insbesondere einen unüberwacht maschinell lernenden Ausreißererkennungs-Algorithmus 6 auf. Der Ausreißererkennungs-Algorithmus 6 ist dazu ausgebildet, in den Daten 2 Cluster und Ausreißer aus diesen Clustern erkennen zu können. Insbesondere implementiert der Ausreißererkennungs-Algorithmus 6 einen Local outlier factor-Algorithmus, um statistische Ausreißer in den Daten zu ermitteln. Der Ausreißererkennungs-Algorithmus 6 benötigt kein Training mittels spezifischen Trainingsdaten, die dem Algorithmus indizieren, was als Ausreißer erkannt werden soll. Der unüberwacht maschinell lernende Algorithmus erkennt Ausreißer vielmehr ohne im Voraus bekannte Zielwerte sowie ohne Belohnung durch die Umwelt.

Die von dem Ausreißererkennungs-Algorithmus 6 ermittelten Ausreißer können vorab durch einen menschlichen Auditor vorab geprüft werden, insbesondere mittels einer Nutzerschnittstelle, die die zweite Softwareeinheit 3b bietet. Die von dem Ausreißererkennungs-Algorithmus 6 detektierten Ausreißer werden anschließend, ggf. nach erfolgter Vorüberprüfung, an die dritte Softwareeinheit 3c übertragen. Durch den Ausreißererkennungs-Algorithmus 6 können auch auf Anomalien hindeutende Ausreißer erkannt werden, die durch den regelbasierten Anomalieerkennungs-Algorithmus 5 nicht erkannt werden, da der Regelsatz auf einen derartigen Ausreißer nicht greift.

Die von dem ersten Anomalieerkennungs-Algorithmus 5 erkannten Anomalien und dem Ausreißererkennungs-Algorithmus 6 erkannten Ausreißer können basierend auf der Nutzerschnittstelle, die die dritte Softwareeinheit 3c bietet, von einem menschlichen Nutzer, insbesondere einem Auditor, geprüft werden, und zwar insbesondere derart, ob nach dessen Ermessen eine tatsächliche Anomalie vorliegt oder nicht. Hierzu weist die dritte Softwareeinheit 3c ein Beurteilungsmodul 9 auf. Mittels des Beurteilungsmoduls 9 kann der automatisch erkannten Anomalie bzw. dem automaisch erkannten Ausreißer eine Beurteilungsinformation (auch als Label bezeichnet) hinzugefügt werden, die angibt, ob es sich bei dem Ausreißer oder der Anomalie tatsächlich um eine(n) solche(n) handelt. Das Beurteilungsmodul 9 kann zudem dazu ausgebildet sein, den Ausreißer oder die Anomalie mit einem Kommentar zu versehen und/oder eine Trackinginfo zu dem Ausreißer oder der Anomalie hinzuzufügen, um ein Tracking zu ermöglichen.

Durch die Beurteilungsinformation entstehen Trainingsdaten, die zum Training eines überwacht maschinell lernenden Anomalieerkennungs-Algorithmus 7 verwendet werden können. Der überwacht maschinell lernende Anomalieerkennungs-Algorithmus 7 wird beispielsweise in einem Softwaremodul 8 ausgeführt. Das Softwaremodul 8 kann mehrere unterschiedliche überwacht maschinell lernende Anomalieerkennungs-Algorithmen ausführen, um eine verbesserte Anomalieerkennung zu gewährleisten.

Das Verfahren zur Erkennung von Anomalien wird vorzugsweise iterativ basierend auf zumindest teilweise neuen Daten 2 vollzogen. Beispielsweise kann mittels eines Planers (oder auch als Scheduler bezeichnet) das Verfahren nach einem vorgegebenen Zeitraum erneut durchgeführt werden, um bei den zumindest teilweise aktualisierten Daten Anomalien ermitteln zu können. Durch die Iterationen werden neue Trainingsdaten für den zumindest einen überwacht maschinell lernenden Anomalieerkennungs-Algorithmus 7 erhalten, so dass dieser aufgrund des Trainings in verbesserter Weise Anomalien erkennen kann.

Zur Erhöhung der Zuverlässigkeit und Vermeidung bzw. Reduzierung von Mehrfach-Detektionen durch den Ausreißererkennungs-Algorithmus 6 und den zumindest einen überwacht maschinell lernenden Anomalieerkennungs-Algorithmus 7 kann ein Vergleichsalgorithmus 12 vorgesehen sein. Der Vergleichsalgorithmus 12 ist dazu ausgebildet, die von dem Ausreißererkennungs-Algorithmus 6 und dem überwacht maschinell lernenden Anomalieerkennungs-Algorithmus 7 bereitgestellten Ausgangsinformationen zu vergleichen und zu einem Satz von fusionierten Ausgangsinformationen zusammenzuführen. So können Detektionen, die von der gleichen oder einer überlappenden Anomalie stammen, erkannt und zu einer einzigen Anomalie zusammengeführt werden.

Vorzugsweise werden den Ausgangsinformationen des Ausreißererkennungs-Algorithmus 6 jeweils automatisch Bewertungsinformationen zugeordnet, die angeben, mit welcher Wahrscheinlichkeit es sich bei einer Detektion tatsächlich um einen auf eine Anomalie hinweisenden Ausreißer handelt. Die Bewertungsinformation kann beispielsweise basierend auf dem Abstand des Ausreißers von einem erkannten Cluster bestimmt werden. Je größer der Abstand ist, desto wahrscheinlicher ist, dass es sich bei dem Ausreißer um eine Anomalie handelt und desto relevanter ist die Detektion.

Vorzugsweise werden auch den Ausgangsinformationen des zweiten Anomalieerkennungs-Algorithmus 7 durch den Algorithmus jeweils automatisch Bewertungsinformationen zugeordnet. Diese Bewertungsinformationen geben an, mit welcher Wahrscheinlichkeit es sich bei den Detektionen, die der zweite Anomalieerkennungs-Algorithmus 7 liefert, um tatsächliche Anomalien handelt.

Vorzugsweise ist der Vergleichsalgorithmus 12 dazu ausgebildet, beim Erstellen des Satzes von fusionierten Ausgangsinformationen die Bewertungsinformationen, die den Ausgangsinformationen des Ausreißererkennungs-Algorithmus 6 zugeordnet wurden, und die Bewertungsinformationen, die den Ausgangsinformationen des zweiten Anomalieerkennungs-Algorithmus 7 zugeordnet wurden, zu Gesamtbewertungsinformationen zusammenzuführen. Hierzu werden die unterschiedlichen Bewertungsinformationen beispielsweise normiert und anschließend addiert, wodurch die Gesamtbewertungsinformationen gebildet werden. Die Addition kann beispielsweise gewichtet erfolgen, wobei vorzugsweise die Bewertungsinformationen des zweiten Anomalieerkennungs-Algorithmus 7 höher gewichtet werden als die Bewertungsinformationen des Ausreißererkennungs-Algorithmus 6.

Anhand der Bewertungsinformationen lässt sich ein Ranking der Detektionen erstellen, wobei es sich bei den Detektionen, die beispielsweise einen höheren Wert als Bewertungsinformation aufweisen, mit einer höheren Wahrscheinlichkeit um eine tatsächliche Anomalie handelt als bei den Detektionen mit einem geringeren Wert als Bewertungsinformation.

Um zu vermeiden, dass es zu Doppeldetektionen zwischen dem ersten, regelbasierten Anomalieerkennungs-Algorithmus 5 und den Detektionen des Ausreißererkennungs-Algorithmus 6 und/oder des zweiten Anomalieerkennungs-Algorithmus 7 kommt, kann ein Vergleichsalgorithmus 13 vorgesehen sein. Der Vergleichsalgorithmus 13 ist dazu ausgebildet, die Detektionen, die von dem Anomalieerkennungs-Algorithmus 5 ermittelt wurden, mit den Detektionen, die durch die maschinell lernenden Algorithmen, d.h. den Ausreißererkennungs-Algorithmus 6 und/oder den zweiten Anomalieerkennungs-Algorithmus 7 ermittelt wurden, zu vergleichen, um Doppeldetektionen zu erkennen. Falls eine Doppeldetektion erkannt wurde, wird eine Detektion der Doppeldetektion ausgefiltert, um die Übermittlung von Mehrfachtreffer an das Beurteilungsmodul 9 zu vermeiden.

Vorzugsweise ist das System 1 dazu ausgebildet, basierend auf Anomalien, die durch den Ausreißererkennungs-Algorithmus 6 und/oder den zweiten Anomalieerkennungs-Algorithmus 7 erkannt wurden und bei der Überprüfung durch den menschlichen Auditor als tatsächliche Anomalien bestätigt wurden, eine neue Regel für den regelbasierten ersten Anomalieerkennungs-Algorithmus 5 zu generieren.

Vorzugsweise wird zur Erstellung einer neuen Regel automatisch geprüft, ob durch den Ausreißererkennungs-Algorithmus 6 und/oder den zweiten Anomalieerkennungs-Algorithmus 7 bereits mehrfach strukturell gleiche Anomalien ermittelt wurden und die automatisch ermittelten Anomalien auch durch den menschlichen Auditor als tatsächliche Anomalie bestätigt wurden. Wenn die Prüfung positiv ist, wird mittels eines automatischen Regelerzeugungsalgorithmus 14, insbesondere eines "time series association rule mining- Algorithmus" und eines Regressions-Modells, eine Regel erstellt.

Die erstellte Regel kann anschließend, vorzugsweise nach einer Überprüfung durch einen menschlichen Auditor, dem Satz von Regeln, die der erste Anomalieerkennungs-Algorithmus 5 zur Anomalieerkennung nutzt, hinzugefügt werden.

Vorzugsweise weist das System 1 einen Algorithmus zur automatischen Erkennung von Anomalien in unstrukturierten Daten auf. Unstrukturierte Daten können beispielsweise Textdokumente oder Textpassagen sein. Der Algorithmus zur automatischen Erkennung von Anomalien in unstrukturierten Daten kann zumindest partiell ein überwacht maschinell lernender Algorithmus sein, der mittels detektierten Anomalien, die durch einen menschlichen Auditor bestätigt wurden, trainiert wird.

Das System 1 kann zumindest einen Textmining-Algorithmus 15, beispielsweise einen Text-Suchalgorithmus, implementieren. Mittels des Textmining-Algorithmus 15 können Textdokumente durchsucht werden, um potentielle Anomalien in den Textdokumenten zu erkennen. Die erkannten potentiellen Anomalien werden anschließend vorzugsweise von einem menschlichen Auditor vorab geprüft und an das Beurteilungsmodul 9 übermittelt. Nach einer Beurteilung der erkannten Anomalie durch einen menschlichen Auditor, ob es sich um eine tatsächliche Anomalie handelt, wird die erkannte Anomalie mit der Beurteilungsinformation an einen maschinell lernenden NLP-Algorithmus 10 (NLP: natural language processing) übermittelt.

Der maschinell lernende NLP-Algorithmus 10 ist insbesondere ein überwacht maschinell lernender Algorithmus, der zunächst mittels der von dem Textmining-Algorithmus 15 ermittelten und vom menschlichen Nutzer bestätigten Anomalien trainiert wird, um nach einer Trainingsphase automatisch Anomalien in den unstrukturierten Datenteilen, d.h. Textdokumenten oder Textteilen der Daten 2 ermitteln zu können.

Zudem können die Detektionen, die von dem maschinell lernenden NLP-Algorithmus 10 ermittelt werden, an das Beurteilungsmodul 9 übermittelt werden, um die Detektionen durch den menschlichen Auditor tracken, beurteilen und/oder kommentieren zu können. Insbesondere werden auch den Detektionen des NLP-Algorithmus 10 durch den menschlichen Auditor Beurteilungsinformationen zugeordnet, die angeben, ob es sich bei den Detektionen menschlichem Ermessen nach um tatsächliche Anomalien handelt oder nicht. Vorzugsweise erfolgt vor dem Übermitteln der Anomalien an das Beurteilungsmodul 9 eine Vorprüfung der Anomalien in der ersten Softwareeinheit 3a. Damit können auch die Detektionen des NLP-Algorithmus 10 selbst und die diesen Detektionen zugeordneten Beurteilungsinformationen als Trainingsdaten zur sukzessiven Verbesserung des überwacht maschinell lernenden NLP-Algorithmus 10 verwendet werden.

Es sei angemerkt, dass der Algorithmus zur Erkennung von Anomalien in unstrukturierten Daten, insbesondere Textdokumenten, rein beispielhaft in der ersten Softwareeinheit 3a vollzogen wird. Alternativ kann der Algorithmus zur Erkennung von Anomalien in unstrukturierten Daten auch in der zweiten Softwareeinheit 3b oder aber in einer weiteren Softwareeinheit vollzogen werden.

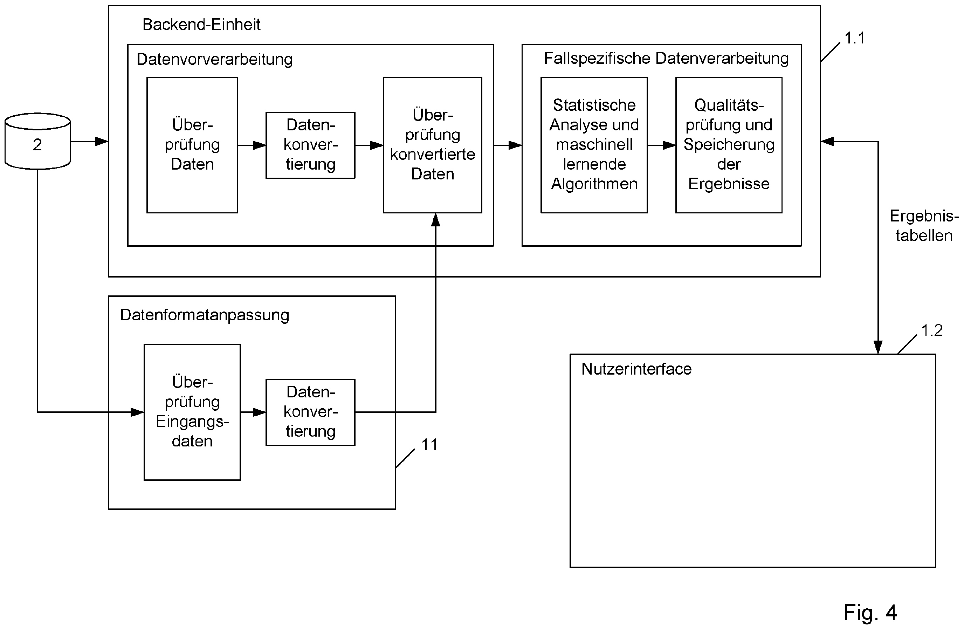

Fig. 4 zeigt beispielhaft und schematisch die Architektur des Systems 1 anhand eines Blockschaubilds. Das System 1 weist eine Backendeinheit 1.1 auf, die beispielsweise einen Server umfasst. Die Backendeinheit 1.1 kann beispielsweise die Rechnereinheit 3 umfassen oder durch diese gebildet sein. Zudem umfasst das System 1 ein Nutzerinterface 1.2, über das der menschliche Nutzer bzw. Auditor mit einer oder mehreren Applikationen in Interaktion treten kann. Das Nutzerinterface 1.2 kann die Nutzerschnittstelle 4 umfassen oder durch diese gebildet sein. Diese Applikationen können insbesondere die erste bis dritte Softwareeinheit 3a bis 3c sein, d.h. eine erste Softwareeinheit 3a als regelbasierte Auditing-Applikation, eine zweite Softwareeinheit 3b als maschinell lernende Applikation zur Ausreißer- und Anomalieerkennung und eine dritte Softwareeinheit 3c als Applikation, mittels der eine Beurteilung bzw. Klassifikation, ein Nachverfolgen (auch als Tracken bezeichnet) und/oder ein Kommentieren der Anomalien möglich ist, umfassen.

Die Backend-Einheit 1.1 empfängt die Daten 2, die beispielsweise aus einem Unternehmens-Informationssystem, insbesondere einem ERP-System (ERP: Enterprise Resource Planning) stammen. Anschließend werden die Daten 2 vorzugsweise einer Datenvorverarbeitung unterzogen, bevor die Daten auf Anomalien hin untersucht werden.

Die Datenvorverarbeitung kann beispielsweise zunächst eine Überprüfung der empfangenen Daten umfassen. Die Überprüfung kann beispielsweise eine Prüfung des Datenformats, des Inhalts und/oder eine Plausibilitätsprüfung umfassen.

Zudem kann die Datenvorverarbeitung der Backend-Einheit 1.1 nach der Datenüberprüfung eine Konvertierung der Daten vornehmen. Die Datenkonvertierung kann beispielsweise eine Auswahl einzelner Spalten, eine Zusammenführung von Tabellen und/oder eine sonstige Datenvorverarbeitung umfassen.

Des Weiteren kann die Datenvorverarbeitung eine Überprüfung der konvertierten Daten vornehmen. Die Überprüfung kann beispielsweise die Prüfung des Datenformats, der Datenrichtigkeit (beispielsweise mittels einer Plausibilitätsprüfung) umfassen. Zudem kann die Datenvorverarbeitung eine Datensicherung veranlassen. Die Datensicherung kann insbesondere derart erfolgen, dass lediglich dann die Daten gesichert und beispielsweise vorherige Daten überschrieben werden, wenn die Datenüberprüfung keine Fehler ermittelt hat.

Die Backend-Einheit 1.1 ist vorzugsweise auch zur Datenverarbeitung der Daten ausgebildet, die von der Datenvorverarbeitung bereitgestellt werden. Vorzugsweise werden die Algorithmen, mittels denen die Anomalieerkennung erfolgt, auf der Backend-Einheit 1.1 ausgeführt.

So werden insbesondere der erste und zweite Anomalieerkennungs-Algorithmus 5, 7 und der Ausreißererkennungs-Algorithmus 6 auf der Backend-Einheit 1.1 ausgeführt. Auch können fallspezifische Analysen, Berechnungen sowie das Training der maschinell lernenden Modelle auf der Backend-Einheit 1.1 vollzogen werden.

Zudem ist die Backendeinheit 1.1 zur Erstellung von Ergebnistabellen ausgebildet, d.h. Tabellen, die die von den Algorithmen erkannten Anomalien bzw. Ausreißer beinhalten.

Zwischen der Backendeinheit 1.1 und dem Nutzerinterface 1.2 werden über eine Schnittstelle Ergebnistabellen ausgetauscht. Dadurch können auf einer Nutzereinheit dem menschlichen Nutzer bzw. dem Auditor die Inhalte der Ergebnistabellen über Nutzerschnittstellen der Softwareeinheiten 3a, 3b, 3c angezeigt werden.

Das System 1 weist eine Formatanpassungseinheit 11 auf. Mittels dieser Formatanpassungseinheit 11 ist es möglich, die Daten 2 anzupassen, wenn sich eine zumindest teilweise Änderung der Datenstruktur ergeben hat. Eine derartige Änderung der Datenstruktur kann beispielsweise eine Migration von SAP R/3 auf SAP S/4 sein.

Die Formatanpassungseinheit 11 ist dazu ausgebildet, die Daten, deren Struktur sich geändert hat, derart anzupassen, dass die nachfolgenden Prozesse der Anomalieerkennung nicht angepasst werden müssen.

Insbesondere weist die Formatanpassungseinheit 11 eine Einheit auf, mittels der eine Überprüfung der Daten 2 erfolgt. Die Einheit kann dazu ausgebildet sein, Formatänderungen zu erkennen und diese ggf. zu kennzeichnen bzw. die Formatänderungen einer nachfolgenden Einheit mitzuteilen. Zusätzlich kann die Einheit auch eine Datenvorverarbeitung vollziehen. Die Datenvorverarbeitung kann beispielsweise zunächst eine Überprüfung der empfangenen Daten umfassen. Die Überprüfung kann beispielsweise eine Prüfung des Inhalts und/oder eine Plausibilitätsprüfung umfassen.

Des Weiteren kann die Formatanpassungseinheit 11 eine Einheit zur Datenkonvertierung aufweisen. Diese ist dazu ausgebildet, die Daten 2, die einer Formatänderung unterliegen, derart anzupassen, dass diese ausgangsseitig ein vorgegebenes Datenformat und/oder Datenmodell aufweisen. Zusätzlich kann die Einheit auch eine weitere Datenkonvertierung vornehmen, beispielsweise eine Auswahl einzelner Spalten, eine Zusammenführung von Tabellen und/oder eine sonstige Datenvorverarbeitung.

Die Formatanpassungseinheit 11 stellt an einer Ausgangsschnittstelle formatangepasste Daten bereit, die anschließend hinsichtlich Korrektheit überprüft und vorzugsweise auch gespeichert werden. Dadurch ist eine einfache und schnelle Anpassung des Systems an geänderte Datenformate möglich, ohne die Algorithmen zur Anomalieerkennung selbst anpassen zu müssen.

Die Formatanpassungseinheit 11 kann funktional in der Backend-Einheit 1.1 vollzogen werden oder aber in einer separaten Recheneinheit.

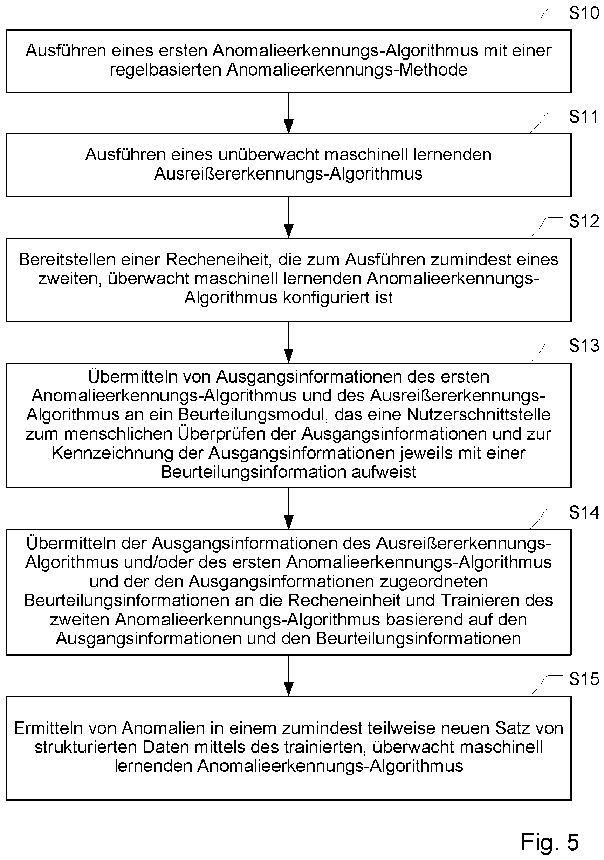

Fig. 5 zeigt ein Blockdiagramm, das die Schritte des Verfahrens zur Anomalieerkennung in zumindest teilweise strukturierten Daten verdeutlicht. Es versteht sich, dass die Schritte in der nachfolgend beschriebenen Reihenfolge oder in einer davon abweichenden Reihenfolge vollzogen werden können.

Zunächst wird ein erster Anomalieerkennungs-Algorithmus auf den Daten ausgeführt, wobei der erste Anomalieerkennungs-Algorithmus eine regelbasierte Anomalieerkennungs-Methode implementiert (S10).

Zudem wird ein Ausreißererkennungs-Algorithmus auf den Daten ausgeführt, wobei der Ausreißererkennungs-Algorithmus ein unüberwacht maschinell lernender Ausreißererkennungs-Algorithmus ist (S11).

Des Weiteren wird einer Recheneinheit bereitgestellt, die zum Ausführen zumindest eines zweiten Anomalieerkennungs-Algorithmus konfiguriert ist. Der zumindest eine zweite Anomalieerkennungs-Algorithmus ist ein überwacht maschinell lernender Anomalieerkennungs-Algorithmus (S12).

Ausgangsinformationen des ersten Anomalieerkennungs-Algorithmus und des Ausreißererkennungs-Algorithmus werden an ein Beurteilungsmodul übermittelt, das eine Nutzerschnittstelle zum menschlichen Überprüfen der Ausgangsinformationen und zur Kennzeichnung der Ausgangsinformationen jeweils mit einer Beurteilungsinformation aufweist (S13).

Die Ausgangsinformationen des Ausreißererkennungs-Algorithmus und/oder des ersten Anomalieerkennungs-Algorithmus und die den Ausgangsinformationen zugeordneten Beurteilungsinformationen werden an die Recheneinheit übermittelt. Der zweite Anomalieerkennungs-Algorithmus wird basierend auf den Ausgangsinformationen und den Beurteilungsinformationen trainiert, um einen trainierten, überwacht maschinell lernenden Anomalieerkennungs-Algorithmus zu erhalten (S14).

Zuletzt erfolgt ein Erkennen von Anomalien in einem zumindest teilweise neuen Satz von Daten mittels des trainierten, überwacht maschinell lernenden Anomalieerkennungs-Algorithmus (S15).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: System
- 1.1: Backend-Einheit
- 1.2: Nutzerinterface
- 2: Daten
- 3: Rechnereinheit
- 3a: erste Softwareeinheit
- 3b: zweite Softwareeinheit
- 3c: dritte Softwareeinheit
- 3.1: Eingangsschnittstelle
- 4: Nutzerschnittstelle
- 5: erster Anomalieerkennungs-Algorithmus
- 6: Ausreißererkennungs-Algorithmus
- 7: zweiter Anomalieerkennungs-Algorithmus
- 8: Softwaremodul
- 9: Beurteilungsmodul
- 10: maschinell lernender NLP-Algorithmus
- 11: Formatanpassungseinheit
- 12: Vergleichsalgorithmus
- 13: Vergleichsalgorithmus
- 14: Regelerzeugungsalgorithmus
- 15: Textmining-Algorithmus

## Patentansprüche

1. Computerimplementiertes Verfahren zur Anomalieerkennung in zumindest teilweise strukturierten Daten (2) umfassend folgende Schritte:
- Ausführen eines ersten Anomalieerkennungs-Algorithmus (5) auf den Daten (2), wobei der erste Anomalieerkennungs-Algorithmus (5) eine regelbasierte Anomalieerkennungs-Methode implementiert (S10);
- Ausführen eines Ausreißererkennungs-Algorithmus (6) auf den Daten, wobei der Ausreißererkennungs-Algorithmus (6) ein unüberwacht maschinell lernender Ausreißererkennungs-Algorithmus ist (S11);
- Bereitstellen einer Recheneinheit, die zum Ausführen zumindest eines zweiten Anomalieerkennungs-Algorithmus (7) konfiguriert ist, wobei der zumindest eine zweite Anomalieerkennungs-Algorithmus (7) ein überwacht maschinell lernender Anomalieerkennungs-Algorithmus ist (S12);
- Übermitteln von Ausgangsinformationen des ersten Anomalieerkennungs-Algorithmus (5) und des Ausreißererkennungs-Algorithmus (6) an ein Beurteilungsmodul (9), das eine Nutzerschnittstelle zum menschlichen Überprüfen der Ausgangsinformationen und zur Kennzeichnung der Ausgangsinformationen jeweils mit einer Beurteilungsinformation aufweist (S13);
- Übermitteln der Ausgangsinformationen des Ausreißererkennungs-Algorithmus (6) und/oder des ersten Anomalieerkennungs-Algorithmus (5) und der den Ausgangsinformationen zugeordneten Beurteilungsinformationen an die Recheneinheit und Trainieren des zweiten Anomalieerkennungs-Algorithmus (7) basierend auf den Ausgangsinformationen und den Beurteilungsinformationen, um einen trainierten, überwacht maschinell lernenden Anomalieerkennungs-Algorithmus zu erhalten (S14);
- Ermitteln von Anomalien in einem zumindest teilweise neuen Satz von Daten (2) mittels des trainierten, überwacht maschinell lernenden Anomalieerkennungs-Algorithmus (S15).

2. Verfahren nach Anspruch 1, **dadurch gekennzeichnet, dass** der zweite Anomalieerkennungs-Algorithmus (7) in einer Schleife iterativ trainiert wird, und zwar derart, dass von dem ersten Anomalieerkennungs-Algorithmus (5) und/oder dem Ausreißererkennungs-Algorithmus (6) neue Ausgangsinformationen bereitgestellt werden, dass diese von einem menschlichen Prüfer überprüft und mit Beurteilungsinformationen versehen werden und dass der zweite Anomalieerkennungs-Algorithmus (7) basierend auf den neuen Ausgangsinformationen und den Beurteilungsinformationen, die den neuen Ausgangsinformationen zugeordnet sind, weiter trainiert wird.

3. Verfahren nach Anspruch 1 oder 2, **dadurch gekennzeichnet, dass** die von dem zweiten Anomalieerkennungs-Algorithmus (7) bereitgestellten Ausgangsinformationen dem Beurteilungsmodul (9) zur menschlichen Überprüfung und Beurteilung zugeführt werden und dass die mit den Beurteilungsinformationen versehenen Ausgangsinformationen des zweiten Anomalieerkennungs-Algorithmus (7) anschließend für das Training des zweiten Anomalieerkennungs-Algorithmus (7) verwendet werden.

4. Verfahren nach einem der vorhergehenden Ansprüche, **dadurch gekennzeichnet, dass** die Ausgangsinformationen des Ausreißererkennungs-Algorithmus (6) mit den Ausgangsinformationen des zweiten Anomalieerkennungs-Algorithmus (7) verglichen werden, um Ausgangsinformationen zu detektieren, die sich auf die gleiche Anomalie beziehen und dass basierend auf dem Ergebnis des Vergleichs ein Satz von fusionierten Ausgangsinformationen bereitgestellt wird.

5. Verfahren nach Anspruch 4, **dadurch gekennzeichnet, dass** den Ausgangsinformationen des Ausreißererkennungs-Algorithmus (6) und den Ausgangsinformationen des zweiten Anomalieerkennungs-Algorithmus (7) jeweils Bewertungsinformationen zugeordnet sind und dass beim Fusionieren der Ausgangsinformationen des Ausreißererkennungs-Algorithmus (6) und des zweiten Anomalieerkennungs-Algorithmus (7), die sich auf die gleiche Anomalie beziehen, die Bewertungsinformationen zu einer Gesamtbewertungsinformation zusammengeführt werden.

6. Verfahren nach einem der Ansprüche 4 oder 5, **dadurch gekennzeichnet, dass** die Ausgangsinformationen des ersten Anomalieerkennungs-Algorithmus (5) mit den fusionierten Ausgangsinformationen des Ausreißererkennungs-Algorithmus (6) und des zweiten Anomalieerkennungs-Algorithmus (7) verglichen werden, um Doppeldetektionen zu erkennen und dass erkannte Doppeldetektionen eliminiert werden.

7. Verfahren nach einem der vorhergehenden Ansprüche, **dadurch gekennzeichnet, dass** basierend auf mehreren Ausgangsinformationen des zweiten Anomalieerkennungs-Algorithmus (7) und diesen Ausgangsinformationen zugeordneten Beurteilungsinformationen automatisch neue Regeln für den ersten Anomalieerkennungs-Algorithmus (5) erzeugt werden.

8. Verfahren nach Anspruch 7, **dadurch gekennzeichnet, dass** eine neu erzeugte Regel durch einen menschlichen Auditor verifiziert und nach der Verifizierung dem Satz von Regeln des ersten Anomalieerkennungs-Algorithmus (5) hinzugefügt wird.

9. Verfahren nach einem der vorhergehenden Ansprüche, **dadurch gekennzeichnet, dass** das Beurteilungsmodul (9) durch eine Softwareeinheit (3c) gebildet wird, die dazu eingerichtet ist, zumindest eine Liste mit potentiellen Ausreißern oder Anomalien zu erstellen und zu den jeweiligen Listeneinträgen Beurteilungsinformationen hinzuzufügen.

10. Verfahren nach Anspruch 9, **dadurch gekennzeichnet, dass** der erste Anomalieerkennungs-Algorithmus (5), der Ausreißererkennungs-Algorithmus (6) und der zweite Anomalieerkennungs-Algorithmus (7) in zumindest einer von der Softwareeinheit (3c) verschiedenen, weiteren Softwareeinheit (3a, 3b) ausgeführt werden und dass die zumindest eine weitere Softwareeinheit (3a, 3b) eine Nutzerschnittstelle aufweist, mittels der Ausgangsinformationen des ersten Anomalieerkennungs-Algorithmus (5), des Ausreißererkennungs-Algorithmus (6) und/oder des zweiten Anomalieerkennungs-Algorithmus (7) gesichtet und an die Softwareeinheit (3c) zum Nachverfolgen der Ausgangsinformationen weitergeleitet werden können.

11. Verfahren nach einem der vorhergehenden Ansprüche, **dadurch gekennzeichnet, dass** mittels eines Text-mining-Algorithmus (15) Anomalien in unstrukturierten Datenteilen ermittelt werden.

12. Verfahren nach Anspruch 11, **dadurch gekennzeichnet, dass** ein überwacht maschinell lernender Algorithmus (10) zur Ermittlung von Anomalien in unstrukturierten Datenteilen vorgesehen ist, der vom Beurteilungsmodul (9) Anomalieinformationen, die sich auf unstrukturierte Datenteile beziehen, und diesen Anomalieinformationen zugeordnete Beurteilungsinformationen als Trainingsdaten empfängt und dass der überwacht maschinell lernende Algorithmus (10) basierend auf den Trainingsdaten trainiert wird.

13. Verfahren nach einem der vorhergehenden Ansprüche, **dadurch gekennzeichnet, dass** die auf Anomalien hin zu untersuchenden Daten vor der Durchführung der Anomalieerkennung einer Formatanpassungseinheit zugeführt werden, in der eine Datenkonvertierung auf ein vorgegebenes Datenformat und/oder Datenmodell erfolgt, auf das der erste und zweite Anomalieerkennungs-Algorithmus (5, 7) angepasst sind.

14. Computerprogramm, umfassend Befehle, die bei der Ausführung des Programms durch einen Computer diesen veranlassen, das Verfahren nach einem der vorhergehenden Ansprüche auszuführen.

15. System zur Anomalieerkennung in zumindest teilweise strukturierten Daten (2) eine umfassend eine Eingangsschnittstelle (3.1) zum Empfangen der auf Anomalien zu untersuchenden Daten (2), zumindest eine Rechnereinheit (3) und eine Nutzerschnittstelle (4) zur Interaktion mit einem menschlichen Auditor, wobei:
- die Rechnereinheit (3) dazu konfiguriert ist, einen ersten Anomalieerkennungs-Algorithmus (5) auf die Daten (2) anzuwenden, wobei der erste Anomalieerkennungs-Algorithmus (5) eine regelbasierte Anomalieerkennungs-Methode implementiert;
- die Rechnereinheit (3) dazu konfiguriert ist, einen Ausreißererkennungs-Algorithmus (6) auf die Daten anzuwenden, wobei der Ausreißererkennungs-Algorithmus (6) ein unüberwacht maschinell lernender Ausreißererkennungs-Algorithmus ist;
- die Rechnereinheit (3) ein Softwaremodul (8) aufweist, das zum Ausführen zumindest eines zweiten Anomalieerkennungs-Algorithmus (7) konfiguriert ist, wobei der zumindest eine zweite Anomalieerkennungs-Algorithmus (7) ein überwacht maschinell lernender Anomalieerkennungs-Algorithmus ist;
- die Rechnereinheit (3) dazu ausgebildet ist, die Ausgangsinformationen des ersten Anomalieerkennungs-Algorithmus (5) und des Ausreißererkennungs-Algorithmus (6) zu einem die Beurteilungsmodul (9) zu übermitteln, wobei das Beurteilungsmodul (9) die Nutzerschnittstelle (4) umfasst, die zum menschlichen Überprüfen der Ausgangsinformationen und zur Kennzeichnung der Ausgangsinformationen jeweils mit einer Beurteilungsinformation ausgebildet ist;
- die Rechnereinheit (3) dazu ausgebildet ist, den zweiten Anomalieerkennungs-Algorithmus (7) basierend auf den Ausgangsinformationen des Ausreißererkennungs-Algorithmus (6) und/oder des ersten Anomalieerkennungs-Algorithmus (5) und der den Ausgangsinformationen zugeordneten Beurteilungsinformationen zu trainieren, um einen trainierten, überwacht maschinell lernenden Anomalieerkennungs-Algorithmus zu erhalten;
- die Rechnereinheit (3) dazu ausgebildet ist, Anomalien in einem zumindest teilweise neuen Satz von Daten mittels des trainierten, überwacht maschinell lernenden Anomalieerkennungs-Algorithmus zu ermitteln.
